# EUROPEAN PATENT APPLICATION

(11) **EP 4 600 056 A1**
(43) Date of publication of application: **13.08.2025**
(21) Application number: 24203872.7
(22) Date of filing: 01.10.2024
(51) Int. Cl.: B60H 1/00, B60H 1/32

(54) **HEAT PUMP SYSTEM FOR A VEHICLE**

(30) Priority: 07.02.2024 KR 20240018901
(71) Applicant: Hyundai Motor Company, Seoul 137-938 (KR); Kia Corporation, Seocho-gu Seoul 06797 (KR); Doowon Climate Control Co., Ltd., Chungcheongnam-do (KR)
(72) Inventor: KIM, Jeawan, 18280 Hwaseong-si, Gyeonggi-do (KR); AN, Hochan, 18280 Hwaseong-si, Gyeonggi-do (KR); KIM, Yeonho, 18280 Hwaseong-si, Gyeonggi-do (KR); KIM, Jeong Keun, 18280 Hwaseong-si, Gyeonggi-do (KR); JEONG, Hoyoung, 18280 Hwaseong-si, Gyeonggi-do (KR); PARK, Man Hee, 18280 Hwaseong-si, Gyeonggi-do (KR); KIM, Yeong Jun, 18280 Hwaseong-si, Gyeonggi-do (KR); KIM, Jae Yeon, 18280 Hwaseong-si, Gyeonggi-do (KR); KIM, Gwi Taek, 18280 Hwaseong-si, Gyeonggi-do (KR); KIM, Chul Min, Asan-si, Chungcheongnam-do (KR)
(74) Representative: Viering, Jentschura & Partner mbB Patent- und Rechtsanwälte

(57) **Abstract**

A heat pump system for a vehicle includes a condenser, a heat-exchanger, an expansion valve, an evaporator, and a gas injection device and is capable of improving the cooling and heating performance. The gas injection device includes a gas-liquid separator, a first valve module, and a second valve module and is configured to selectively operate in a selected air conditioning mode of a vehicle interior.

## Description

### CROSS-REFERENCE TO RELATED APPLICATION

This application claims priority to and the benefit of Korean Patent Application No. 10-2024-0018901, filed in the Korean Intellectual Property Office on February 7, 2024, the entire contents of which are incorporated herein by reference.

### BACKGROUND

### Field

The present disclosure relates to a heat pump system for a vehicle. More particularly, the present disclosure relates to a heat pump system for a vehicle capable of improving the cooling and heating performance.

### (b) Description of the Related Art

Generally, an air conditioning system for a vehicle includes an air conditioner unit circulating a refrigerant in order to heat or cool an interior of the vehicle.

The air conditioner unit, which is to maintain the interior of the vehicle at an appropriate temperature regardless of a change in an external temperature to maintain a comfortable interior environment, is configured to heat or cool the interior of the vehicle by heat-exchange by a condenser and an evaporator in a process in which a refrigerant discharged by driving of a compressor is circulated back to the compressor through the condenser, receiver-drier, expansion valve, and evaporator.

The air conditioner unit lowers the interior temperature and humidity by condensing a high-temperature high-pressure gas-phase refrigerant compressed from the compressor by the condenser. The refrigerant then passes through the receiver-drier and the expansion valve before evaporating in the evaporator in a cooling mode in summer.

Recently, in accordance with a continuous increase in interest in energy efficiency and an environmental pollution problem, the development of an environmentally-friendly vehicle capable of substantially substituting for an internal combustion engine vehicle is required. The environmentally-friendly vehicles are classified into an electric vehicle driven using a fuel cell or electricity as a power source and a hybrid vehicle driven using an engine and a battery.

In the electric vehicle or the hybrid vehicle among these environmentally-friendly vehicles, a separate heater is not used unlike an air conditioner of a general vehicle, and an air conditioner used in the environmentally-friendly vehicle is generally called a heat pump system.

The electric vehicle, powered by a fuel cell, generates driving force by converting chemical energy from the reaction between oxygen and hydrogen into electrical energy. In this process, heat energy is generated by the chemical reaction in the fuel cell.

In addition, the hybrid vehicle generates driving force by driving a motor using electricity supplied from the fuel cell described above or an electrical battery, together with an engine operated by a general fuel. Therefore, heat generated from the fuel cell or the battery and the motor should be effectively removed in order to secure performance of the motor.

Therefore, in the hybrid vehicle or the electric vehicle according to the related art, cooling means, a heat pump system, and a battery cooling system, respectively, should be configured as separate closed circuits so as to prevent heat generation of the motor, an electric component, and the battery including a fuel cell.

Therefore, a size and a weight of a cooling module disposed at the front of the vehicle are increased, and a layout of connection pipes supplying a refrigerant and a coolant to each of the heat pump system, the cooling means, and the battery cooling system in an engine compartment becomes complicated.

In addition, since a battery cooling system for heating or cooling the battery according to a state of the vehicle is separately provided to obtain an optimal performance of the battery, a plurality of valves for selectively interconnecting connections pipes are employed, and thus noise and vibration due to frequent opening and closing operations of the valves may be introduced into the vehicle interior, thereby deteriorating the ride comfort.

In addition, when heating the vehicle interior, the heating performance may be deteriorated due to the lack of heat source, the electricity consumption may be increased due to the usage of the electric heater, and the power consumption of the compressor may be increased.

The above information disclosed in this Background section is provided only to enhance understanding of the background of the present disclosure, and therefore it may contain information that does not form the prior art that is already known to a person of ordinary skill in the art.

### SUMMARY

The present disclosure provides a heat pump system for a vehicle capable of improving the cooling and heating performance by increasing the flow amount of the refrigerant by employing a gas injection device configured to selectively operate in at least one mode selected for air conditioning of a vehicle interior.

In one embodiment of the present disclosure, a heat pump system for a vehicle may include: a compressor, a condenser, a heat-exchanger, an expansion valve, and an evaporator that are connected through a refrigerant line. The heat pump system may further include: a gas-liquid separator configured to separate the refrigerant into a gaseous refrigerant and a liquid refrigerant and selectively supply the gaseous refrigerant to the compressor, and a first valve module disposed on a refrigerant line between the condenser and the heat-exchanger and connected to the condenser and the heat-exchanger, respectively. In particular, the first valve module is connected to the refrigerant line at a downstream end of the heat-exchanger and the gas-liquid separator, respectively. The heat pump system may further include: a second valve module disposed on the refrigerant line between the heat-exchanger and the expansion valve and connected to the heat-exchanger and the expansion valve, respectively. The second valve module is connected to the refrigerant line at an upstream end of the heat-exchanger and the gas-liquid separator, respectively, and the second valve module is also connected to the refrigerant line at a downstream end of the evaporator. In particular, at least one among the first valve module and the second valve module may be configured to selectively expand the refrigerant while adjusting a flow of the refrigerant based on a plurality of operation modes.

The first valve module may have two inlet ports and two outlet ports, and may include two 3-way valves whose first ports are interconnected.

A second port of a first 3-way valve among the two 3-way valves may be connected to the condenser, a remaining third port of the first 3-way valve among the two 3-way valves may be connected to the heat-exchanger, a second port of a second 3-way valve among the two 3-way valves may be connected to the refrigerant line at the downstream end of the heat-exchanger, and a remaining third port of the second 3-way valve among the two 3-way valves may be connected to the gas-liquid separator.

The first valve module may have two inlet ports and two outlet ports, and may include one 4-way valve.

A first port of the one 4-way valve may be connected to the condenser, a second port of the one 4-way valve may be connected to the heat-exchanger, a third port of the one 4-way valve may be connected to the refrigerant line at the downstream end of the heat-exchanger, and a remaining fourth port of the one 4-way valve may be connected to the gas-liquid separator.

The second valve module may have two inlet ports and three outlet ports, and may include two 3-way valves whose first ports are interconnected, and a first one port among the three outlet ports may be branched between the interconnected ports and connected to the expansion valve.

A second port of a first 3-way valve among the two 3-way valves may be connected to the gas-liquid separator, a remaining third port of the first 3-way valve among the two 3-way valves may be connected to the refrigerant line at the upstream end of the heat-exchanger, a second port of a second 3-way valve among the two 3-way valves may be connected to the heat-exchanger, and a remaining third port of the second 3-way valve among the two 3-way valves may be connected to the refrigerant line at the downstream end of the evaporator.

The second valve module may have two inlet ports and three outlet ports, and may include a 3-way valve and a 4-way valve whose first ports are interconnected.

A second port of the 3-way valve may be connected to the heat-exchanger, a remaining third port of the 3-way valve may be connected to the refrigerant line at the downstream end of the evaporator, a second port of the 4-way valve may be connected to the gas-liquid separator, a third port of the 4-way valve may be connected to the refrigerant line at the upstream end of the heat-exchanger, and a remaining fourth port of the 4-way valve may be connected to the expansion valve.

A second port of the 3-way valve may be connected to the gas-liquid separator, a remaining third port of the 3-way valve may be connected to the refrigerant line at the upstream end of the heat-exchanger, a second port of the 4-way valve may be connected to the heat-exchanger, a third port of the 4-way valve may be connected to the expansion valve, a remaining fourth port of the 4-way valve may be connected to the refrigerant line at the downstream end of the evaporator.

An accumulator may be disposed between the evaporator and the compressor.

In a first operation mode among the plurality of operation modes, the first valve module may be configured to supply the refrigerant introduced from the condenser to the heat-exchanger without expansion, the second valve module may be configured to supply the refrigerant introduced from the heat-exchanger to the expansion valve without expansion, and the expansion valve may be configured to expand the supplied refrigerant and supply the expanded refrigerant to the evaporator.

In a first operation mode among the plurality of operation modes, the first valve module may be configured to supply the refrigerant introduced from the condenser to the heat-exchanger without expansion, the second valve module may be configured to expand the refrigerant introduced from the heat-exchanger and supply the expanded refrigerant to the expansion valve, and the expansion valve may be configured to supply the supplied refrigerant to the evaporator without expansion.

In a second operation mode among the plurality of operation modes, the first valve module may be configured to expand the refrigerant introduced from the condenser and supply the expanded refrigerant to the heat-exchanger, and the second valve module may be configured to supply the refrigerant introduced from the heat-exchanger to the refrigerant line at the downstream end of the evaporator without expansion.

In a third operation mode among the plurality of operation modes, the first valve module may be configured to supply the refrigerant introduced from the condenser to the heat-exchanger without expansion, the first valve module may be configured to expand the refrigerant introduced from the heat-exchanger and supply the expanded refrigerant to the gas-liquid separator, the gas-liquid separator may be configured to supply the gaseous refrigerant to the compressor, and to supply the liquid refrigerant to the second valve module, the second valve module may be configured to supply the refrigerant introduced from the gas-liquid separator to the expansion valve without expansion, and the expansion valve may be configured to expand the supplied refrigerant and supply the expanded refrigerant to the evaporator.

In a third operation mode among the plurality of operation modes, the first valve module may be configured to supply the refrigerant introduced from the condenser to the heat-exchanger without expansion, the first valve module may be configured to expand the refrigerant introduced from the heat-exchanger and supply the expanded refrigerant to the gas-liquid separator, the gas-liquid separator may be configured to supply the gaseous refrigerant to the compressor, and to supply the liquid refrigerant to the second valve module, the second valve module may be configured to expand the refrigerant introduced from the gas-liquid separator and supply the expanded refrigerant to the expansion valve, and the expansion valve may be configured to supply the supplied refrigerant to the evaporator without expansion.

In a fourth operation mode among the plurality of operation modes, the first valve module may be configured to expand the refrigerant introduced from the condenser and supply the expanded refrigerant to the gas-liquid separator, the gas-liquid separator may be configured to supply the gaseous refrigerant to the compressor, and to supply the liquid refrigerant to the second valve module, the second valve module may be configured to expand the refrigerant introduced from the gas-liquid separator and supply the expanded refrigerant to the heat-exchanger, and the second valve module may be configured to supply the refrigerant introduced from the heat-exchanger to the refrigerant line at the downstream end of the evaporator without expansion.

The refrigerant line may include a first line connecting the compressor and the condenser, a second line connecting the condenser and the first valve module, a third line connecting the heat-exchanger and the first valve module, a fourth line connecting the heat-exchanger and the second valve module, a fifth line connecting the evaporator and the second valve module, and a sixth line connecting the compressor and the evaporator.

A heat pump system may further include a first connection line having a first end connected to the first valve module and a second end connected to the gas-liquid separator, a second connection line having a first end connected to the first valve module and a second end connected to the refrigerant line at the downstream end of the heat-exchanger, a third connection line having a first end connected to the gas-liquid separator and a second end connected to the compressor, a fourth connection line having a first end connected to the gas-liquid separator and a second end connected to the second valve module, a fifth connection line having a first end connected to the second valve module and a second end connected to the refrigerant line at the upstream end of the heat-exchanger, and a sixth connection line having a first end connected to the second valve module and a second end connected to the refrigerant line between the compressor and the evaporator.

The gas-liquid separator may be operated when the expanded refrigerant is supplied from the first valve module, in a state of cooling or heating a vehicle interior, and configured to supply the gaseous refrigerant among the supplied refrigerant to the compressor through the third connection line to increase a flow amount of the refrigerant flowing through the refrigerant line.

The plurality of operation modes may include a first operation mode for cooling a vehicle interior without operating the gas-liquid separator, a second operation mode for heating the vehicle interior without operating the gas-liquid separator, a third operation mode for cooling the vehicle interior by operating the gas-liquid separator, and a fourth operation mode for heating the vehicle interior by operating the gas-liquid separator.

As described above, according to a heat pump system for a vehicle according to an embodiment, by employing a gas injection device configured to selectively operate in at least one mode selected for air conditioning of a vehicle interior to increase the flow amount of the refrigerant, the cooling and heating performance may be improved.

In addition, according to the present disclosure, the performance of the system by using the gas injection device may be maximized while minimizing the required components, and accordingly, streamlining and simplification of the system may be achieved.

In addition, according to the present disclosure, through streamlining of an entire system, it is possible to reduce manufacturing cost and weight and improve space utilization.

### BRIEF DESCRIPTION OF THE DRAWINGS

FIG. 1 is a block diagram of a heat pump system for a vehicle according to an embodiment.
FIG. 2 is a schematic diagram of a first valve module in a heat pump system for a vehicle according to a first embodiment.
FIG. 3 is an operation diagram of a first valve module in a heat pump system for a vehicle according to a first embodiment.
FIG. 4 is a schematic diagram of a first valve module in a heat pump system for a vehicle according to a second embodiment.
FIG. 5 is an operation diagram of a first valve module in a heat pump system for a vehicle according to a second embodiment.
FIG. 6 is a schematic diagram of a second valve module in a heat pump system for a vehicle according to a first embodiment.
FIG. 7 is an operation diagram of a second valve module in a heat pump system for a vehicle according to a first embodiment.
FIG. 8 is a schematic diagram of a second valve module in a heat pump system for a vehicle according to a second embodiment.
FIG. 9 is an operation diagram of a second valve module in a heat pump system for a vehicle according to a second embodiment.
FIG. 10 is a schematic diagram of a second valve module in a heat pump system for a vehicle according to a third embodiment.
FIG. 11 is an operation diagram of a second valve module in a heat pump system for a vehicle according to a third embodiment.
FIG. 12 is an operation diagram according to a first operation mode in a heat pump system for a vehicle according to an embodiment.
FIG. 13 is an operation diagram according to a second operation mode in a heat pump system for a vehicle according to an embodiment.
FIG. 14 is an operation diagram according to a third operation mode in a heat pump system for a vehicle according to an embodiment.
FIG. 15 is an operation diagram according to a fourth operation mode in a heat pump system for a vehicle according to an embodiment.

### DETAILED DESCRIPTION

Embodiments of the present disclosure are hereinafter described in detail with reference to the accompanying drawings.

Some embodiments disclosed in the present disclosure and the constructions depicted in the drawings are intended for purposes of illustration only and are not intended to limit the scope of the present disclosure. Therefore, it should be understood that there may be various equivalents and variations at the time of the application of this specification.

In order to clarify the present disclosure, parts that are not related to the description are omitted, and the same elements or equivalents are referred to with the same reference numerals throughout the specification.

Also, the size and thickness of each element are arbitrarily shown in the drawings, but the present disclosure is not necessarily limited thereto, and in the drawings, the thickness of layers, films, panels, regions, etc., are exaggerated for clarity.

In addition, unless explicitly described to the contrary, the word "comprise" and variations such as "comprises" or "comprising", should be understood to imply the inclusion of stated elements but not the exclusion of any other elements.

Furthermore, each of terms, such as "...unit", "...means", "...portions", "...part", and "...member" described in the specification, mean a unit of a comprehensive element that performs at least one function or operation. When a component, device, element, or the like of the present disclosure is described as having a purpose or performing an operation, function, or the like, the component, device, or element should be considered herein as being "configured to" meet that purpose or to perform that operation or function.

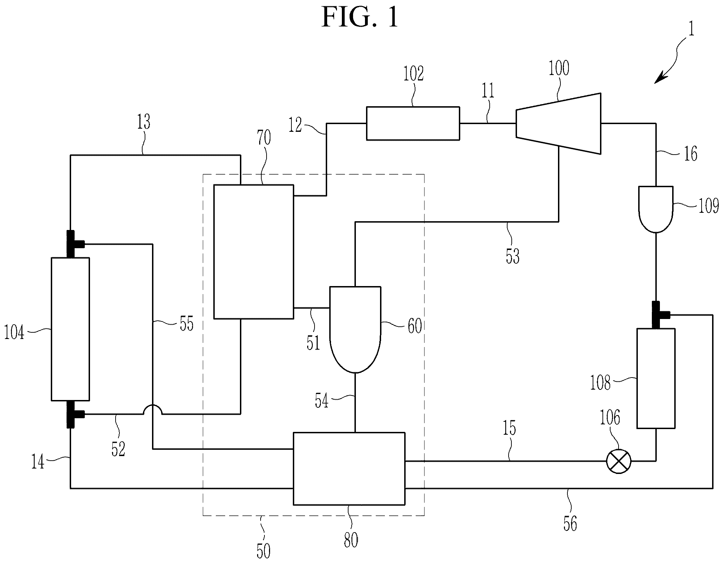

FIG. 1 is a block diagram of a heat pump system for a vehicle according to an embodiment.

According to an embodiment of the present disclosure, a heat pump system for a vehicle may include a gas injection device configured to selectively operate in at least one mode selected for air conditioning of a vehicle interior to increase the flow amount of the refrigerant, such that the cooling and heating performance may be improved.

According to an embodiment, referring to FIG. 1, the heat pump system 1 may include a compressor 100, a condenser 102, a heat-exchanger 104, an expansion valve 106, an evaporator 108, and a gas injection device 50.

The gas injection device 50 may include a gas-liquid separator 60, a first valve module 70, and a second valve module 80. Here, the gas-liquid separator 60, the first valve module 70, and the second valve module 80 may be integrally configured.

In addition, the compressor 100, the condenser 102, the heat-exchanger 104, the expansion valve 106, and the evaporator 108 may be interconnected through the refrigerant line.

In one embodiment, the refrigerant line may include a first line 11, a second line 12, a third line 13, a fourth line 14, a fifth line 15, and a sixth line 16.

The first line 11 may connect the compressor 100 and the condenser 102. The second line 12 may connect the condenser 102 and the first valve module 70.

The third line 13 may connect the heat-exchanger 104 and the first valve module 70. The fourth line 14 may connect the heat-exchanger 104 and the second valve module 80.

The fifth line 15 may connect the evaporator 108 and the second valve module 80. In addition, the sixth line 16 may connect the compressor 100 and the evaporator 108.

In this embodiment, the compressor 100 may compress the supplied refrigerant.

The condenser 102 may be connected to the compressor 100 through the first line 11. Here, the condenser 102 and the evaporator 108 may be provided inside a heating, ventilation, and air conditioning (HVAC) module (not shown).

In addition, an opening/closing door may be further provided inside the HVAC module such that the air having passed through the evaporator 108 may be selectively introduced into the condenser 102 at the time of cooling or heating of the vehicle interior.

When heating the vehicle interior, the opening/closing door may be opened such that the ambient air having passed through the evaporator 108 may be introduced into the condenser 102.

To the contrary, when cooling the vehicle interior, the opening/closing door may close a side toward the condenser 102 such that the ambient air cooled while passing through the evaporator 108 may be directly introduced into the vehicle.

In this embodiment, the first valve module 70 may be disposed on the refrigerant line between the condenser 102 and the heat-exchanger 104 and connected to the condenser 102 and the heat-exchanger 104, respectively.

The first valve module 70 may be connected to the refrigerant line at a downstream end of the heat-exchanger 104 and the gas-liquid separator 60, respectively.

In more detail, the first valve module 70 may be connected to the condenser 102 through the second line 12.

The heat-exchanger 104 may be connected to the first valve module 70 through the third line 13.

Here, the heat-exchanger 104 may selectively condensate or evaporate the refrigerant by heat-exchanging an operation fluid with the refrigerant supplied from the first valve module 70. The operation fluid may include a coolant or ambient air.

In addition, the second valve module 80 may be disposed on the refrigerant line between the heat-exchanger 104 and the expansion valve 106 and connected to the heat-exchanger 104 and the expansion valve 106, respectively.

The second valve module 80 may be connected to the refrigerant line at an upstream end of the heat-exchanger 104 and the gas-liquid separator 60, respectively, and may be connected to a refrigerant line at a downstream end of the evaporator 108.

In more detail, the second valve module 80 may be connected to the heat-exchanger 104 through the fourth line 14.

Here, at least one of the first valve module 70 or the second valve module 80 may selectively expand the refrigerant while adjusting the flow of the refrigerant depending on a plurality of operation modes.

A detailed configuration of the first valve module 70 and the second valve module 80 is described in further detail below.

In this embodiment, the evaporator 108 may be connected to the second valve module 80 through the fifth line 15. The evaporator 108 may be connected to the compressor 100 through the sixth line 16.

Here, the expansion valve 106 may be provided on the fifth line 15. The expansion valve 106 may selectively expand the refrigerant introduced through the fifth line 15.

Accordingly, when the refrigerant expanded by the operation of one of the second valve module 80 or the expansion valve 106 is introduced, the evaporator 108 may evaporate the refrigerant by heat-exchanging with the air introduced into the HVAC module.

In this embodiment, an accumulator 109 may be provided on the sixth line 16 between the evaporator 108 and the compressor 100. The accumulator 109 may supply only the gaseous refrigerant to the compressor 100, and thereby may improve efficiency and durability of the compressor 100.

In addition, the gas injection device 50 may selectively expand the refrigerant having passed through at least one among the condenser 102 or the heat-exchanger 104, at the first valve module 70, and flow the expanded refrigerant.

Simultaneously, the gas injection device 50 may selectively supply a partial refrigerant among the refrigerant supplied from the first valve module 70 to the compressor 100, and thereby increase the overall flow amount of the refrigerant flowing through one line among the first to sixth lines 11, 12, 13, 14, 15, and 16.

Here, the gas injection device 50 may further include a first connection line 51, a second connection line 52, a third connection line 53, a fourth connection line 54, a fifth connection line 55, and a sixth connection line 56.

In one embodiment, a first end of the first connection line 51 may be connected to the first valve module 70. A second end of the first connection line 51 may be connected to the gas-liquid separator 60.

Here, the gas-liquid separator 60 may separate and selectively discharge a gaseous refrigerant and a liquid refrigerant among the interiorly introduced refrigerant. In other words, the gas-liquid separator 60 may selectively supply the gaseous refrigerant to the compressor 100.

A first end of the second connection line 52 may be connected to the first valve module 70. A second end of the second connection line 52 may be connected to the fourth line 14.

In this embodiment, a first end of the third connection line 53 may be connected to the gas-liquid separator 60. A second end of the third connection line 53 may be connected to the compressor 100.

The third connection line 53 configured as such may selectively supply the gaseous refrigerant to the compressor 100 discharged from the gas-liquid separator 60.

In other words, while cooling or heating the vehicle interior, the gas-liquid separator 60 may be operated when the expanded refrigerant is supplied from the first valve module 70.

Here, the gas-liquid separator 60 may supply the gaseous refrigerant among the supplied refrigerant to the compressor 100 through the third connection line 53, and thereby increase the flow amount of the refrigerant flowing through at least one line among the first to sixth lines 11, 12, 13, 14, 15, and 16.

A first end of the fourth connection line 54 may be connected to the gas-liquid separator 60. A second end of the fourth connection line 54 may be connected to the second valve module 80.

Accordingly, the liquid refrigerant among the refrigerant supplied to the gas-liquid separator 60 may be supplied to the second valve module 80 through the fourth connection line 54.

In this embodiment, a first end of the fifth connection line 55 may be connected to the second valve module 80. A second end of the fifth connection line 55 may be connected to the third line 13.

In addition, a first end of the sixth connection line 56 may be connected to the second valve module 80. A second end of the sixth connection line 56 may be connected to the sixth line 16 between the compressor 100 and the evaporator 108.

In more detail, the second end of the sixth connection line 56 may be connected to the sixth line 16 between the evaporator 108 and the accumulator 109.

Accordingly, the refrigerant flowing from the second valve module 80 along the sixth connection line 56 may be introduced into the sixth line 16 at the downstream end of the evaporator 108. The refrigerant introduced into the sixth line 16 may pass through the accumulator 109 along the sixth line 16, and then be introduced into the compressor 100.

In this embodiment, the upstream end of the heat-exchanger 104, the downstream end of the heat-exchanger 104, an upstream end of the evaporator 108, and the downstream end of the evaporator 108 may be set based on a flow direction of the refrigerant.

Based on the direction in which the refrigerant flows along the third line 13 and the fourth line 14, the position at which the refrigerant is introduced into the heat-exchanger 104 may be defined as the upstream end of the heat-exchanger 104, and the position at which the refrigerant is discharged from the heat-exchanger 104 may be defined as the downstream end of the heat-exchanger 104.

In addition, based on the direction in which the refrigerant flows along the fifth line 15 and the sixth line 16, the position at which the refrigerant is introduced into the evaporator 108 may be defined as the upstream end of the evaporator 108, and the position at which the refrigerant is discharged from the evaporator 108 may be defined as the downstream end of the evaporator 108.

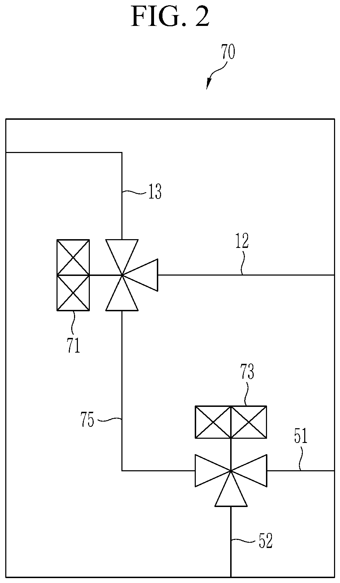

In addition, various embodiment and various operation examples of the first valve module 70 and the second valve module 80 are described in detail with reference to FIG. 2 to FIG. 11.

As shown in FIG. 2 to FIG. 5, the first valve module 70 may be divided into a first embodiment and a second embodiment.

The first valve module 70 according to a first embodiment is described in detail with reference to FIG. 2.

FIG. 2 is a schematic diagram of a first valve module in a heat pump system for a vehicle according to the first embodiment.

Referring to FIG. 2, the first valve module 70 may have two inlet ports and two outlet ports, and may include two 3-way valves 71 and 73 whose first ports are interconnected.

In one form, a second port of a first 3-way valve 71 among the two 3-way valves 71 and 73 may be connected to the condenser 102 through the second line 12.

A remaining third port of the first 3-way valve 71 among the two 3-way valves 71 and 73 may be connected to the heat-exchanger 104 through the third line 13.

A second port of a second 3-way valve 73 among the two 3-way valves 71 and 73 may be connected to the fourth line 14 through the second connection line 52, at the downstream end of the heat-exchanger 104.

In addition, a remaining third port of the second 3-way valve 73 among the two 3-way valves 71 and 73 may be connected to the gas-liquid separator 60 through the first connection line 51.

In more detail, as shown in FIG. 2, the first valve module 70 may include a first control valve 71 that is the first 3-way valve 71, a second control valve 73 that is the second 3-way valve, and a first valve connection line 75.

Each of the second line 12 and the third line 13 may be connected to the first control valve 71.

Here, a first end of the second line 12 may be connected to the condenser 102. A second end of the second line 12 may be connected to the first control valve 71.

In addition, a first end of the third line 13 may be connected to the first control valve 71. A second end of the third line 13 may be connected to the heat-exchanger 104.

Each of the first connection line 51 and the second connection line 52 may be connected to the second control valve 73.

Here, the first end of the first connection line 51 may be connected to the second control valve 73. The second end of the first connection line 51 may be connected to the gas-liquid separator 60.

The first end of the second connection line 52 may be connected to the second control valve 73. The second end of the second connection line 52 may be connected to the fourth line 14 between the heat-exchanger 104 and the second valve module 80.

Here, the first control valve 71 and the second control valve 73 may be a 3-way electronic expansion valve that selectively expands the refrigerant while controlling the flow of the supplied refrigerant.

In addition, the first valve connection line 75 may be connected to the first control valve 71 and the second control valve 73.

In other words, a first end of the first valve connection line 75 may be connected to the first control valve 71. A second end of the first valve connection line 75 may be connected to the second control valve 73.

Accordingly, the first control valve 71 may be connected to the second control valve 73 through the first valve connection line 75.

In the first valve module 70 according to the first embodiment, the first control valve 71 may selectively expand the refrigerant introduced from the condenser 102 through the second line 12.

Simultaneously, the first control valve 71 may selectively discharge the expanded refrigerant or the unexpanded refrigerant through the third line 13 or the first valve connection line 75.

In addition, the second control valve 73 may selectively expand the refrigerant introduced through the second connection line 52 or the first valve connection line 75. At the same time, the second control valve 73 may selectively discharge the expanded refrigerant or the unexpanded refrigerant through the first connection line 51.

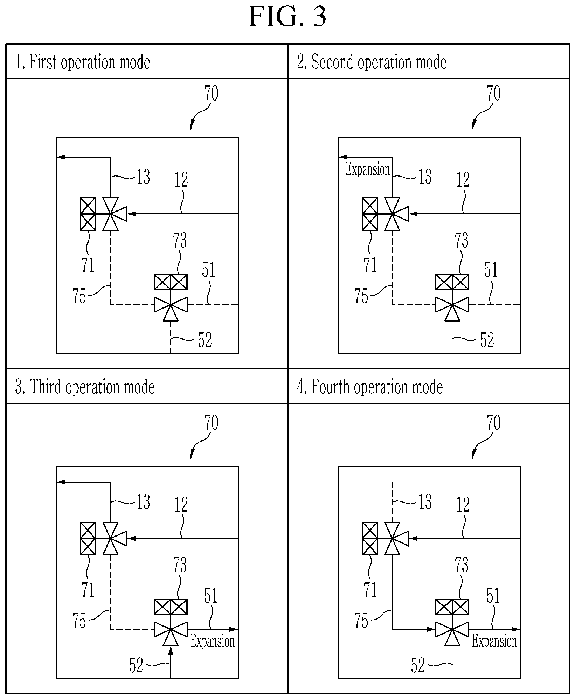

An operation of the first valve module 70 according to a first embodiment configured is described in detail with reference to FIG. 3.

FIG. 3 is an operation diagram of a first valve module in a heat pump system for a vehicle according to the first embodiment.

Referring to FIG. 3, in the plurality of operation modes, the first valve module 70 may operate as follows.

In a first operation mode among the plurality of operation modes, the first control valve 71 in the first valve module 70 may discharge the refrigerant introduced through the second line 12 to the third line 13 without expansion.

Simultaneously, the second control valve 73 may close the first connection line 51, the second connection line 52, and the first valve connection line 75.

In a second operation mode among the plurality of operation modes, the first control valve 71 in the first valve module 70 may expand the refrigerant introduced through the second line 12. Thereafter, the first control valve 71 may discharge the expanded refrigerant to the third line 13.

Simultaneously, the second control valve 73 may close the first connection line 51, the second connection line 52, and the first valve connection line 75.

In a third operation mode among the plurality of operation modes, the first control valve 71 in the first valve module 70 may discharge the refrigerant introduced through the second line 12 to the third line 13 without expansion.

Simultaneously, the second control valve 73 may expand the refrigerant introduced into the second connection line 52. Thereafter, the second control valve 73 may discharge the expanded refrigerant to the first connection line 51.

In addition, in a fourth operation mode among the plurality of operation modes, the first control valve 71 in the first valve module 70 may discharge the refrigerant introduced through the second line 12 to the first valve connection line 75 without expansion.

Simultaneously, the second control valve 73 may expand the refrigerant introduced into the first valve connection line 75. Thereafter, the second control valve 73 may discharge the expanded refrigerant to the first connection line 51.

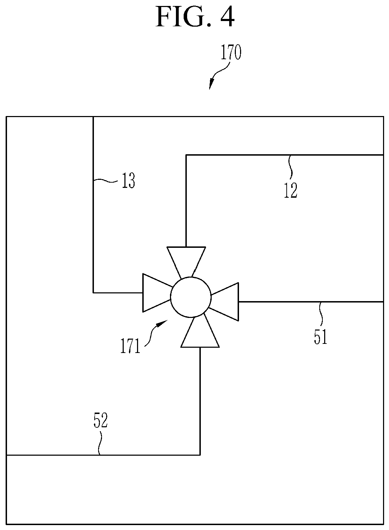

In addition, the first valve module 170 according to a second embodiment is described in detail with reference to FIG. 4.

FIG. 4 is a schematic diagram of a first valve module in a heat pump system for a vehicle according to the second embodiment.

Referring to FIG. 4, the first valve module 170 may have two inlet ports and two outlet ports, and may include one 4-way valve 171.

In one embodiment, a first port of the one 4-way valve 171 may be connected to the condenser 102 through the second line 12.

A second port of the one 4-way valve 171 may be connected to the heat-exchanger 104 through the third line 13.

In addition, a third port of the one 4-way valve 171 may be connected to the fourth line 14 through the second connection line 52, at the downstream end of the heat-exchanger 104.

In addition, a remaining fourth port of the one 4-way valve 171 may be connected to the gas-liquid separator 60 through the first connection line 51.

In more detail, as shown in FIG. 4, the first valve module 170 according to the second embodiment may include one control valve 171, which is the one 4-way valve 171.

Each of the second line 12, the third line 13, the first connection line 51, and the second connection line 52 may be connected to the control valve 171.

Here, the control valve 171 may be a 4-way electronic expansion valve that selectively expands the refrigerant while controlling the flow of the supplied refrigerant.

In the first valve module 170 according to the second embodiment configured as such, the control valve 171 may selectively expand the refrigerant introduced through at least one of the second line (12) and the second connection line (52).

Simultaneously, the control valve 171 may selectively discharge the expanded refrigerant or the unexpanded refrigerant through the third line 13 or the first connection line 51.

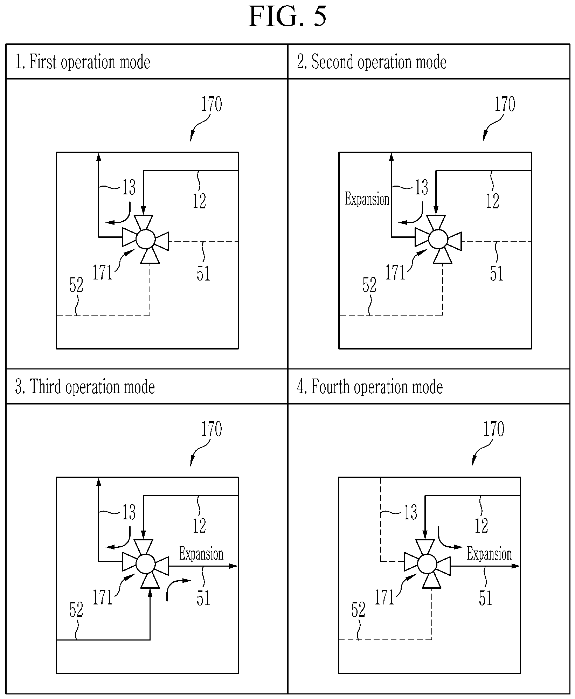

An operation of the first valve module 170 according to a second embodiment is described in detail with reference to FIG. 5.

FIG. 5 is an operation diagram of a first valve module in a heat pump system for a vehicle according to a second embodiment.

Referring to FIG. 5, in the plurality of operation modes, the second valve module 170 may operate as follows in the plurality of operation modes.

First, in the first operation mode among the plurality of operation modes, the control valve 171 in the first valve module 170 may discharge the refrigerant introduced through the second line 12 to the third line 13 without expansion.

Simultaneously, the control valve 171 may close the first connection line 51 and the second connection line (52).

In the second operation mode among the plurality of operation modes, the control valve 171 in the first valve module 170 may expand the refrigerant introduced through the second line 12. Thereafter, the control valve 171 may discharge the expanded refrigerant to the third line 13.

Simultaneously, the control valve 171 may close the first connection line 51 and the second connection line 52.

In the third operation mode among the plurality of operation modes, the control valve 171 in the first valve module 170 may discharge the refrigerant introduced through the second line 12 to the third line 13 without expansion.

Simultaneously, the control valve 171 may expand the refrigerant introduced into the second connection line 52. Thereafter, the control valve 73 may discharge the expanded refrigerant to the first connection line 51.

In addition, in the fourth operation mode among the plurality of operation modes, the control valve 171 in the first valve module 170 may expand the refrigerant introduced through the second line 12. Thereafter, the control valve 171 may discharge the expanded refrigerant to the first connection line 51.

Here, the third line 13 and the second connection line 52 may be closed by an operation of the control valve 171.

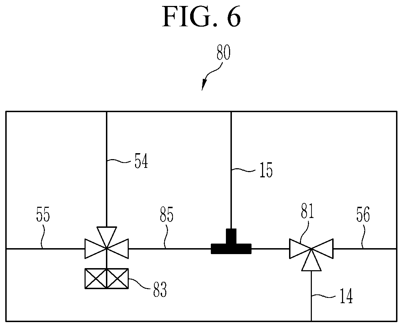

In addition, as shown in FIG. 6 to FIG. 11, the second valve module 80 may be divided into a first embodiment, a second embodiment, and a third embodiment.

First, the second valve module 80 according to a first embodiment is described in detail with reference to FIG. 6.

FIG. 6 is a schematic diagram of a second valve module in a heat pump system for a vehicle according to a first embodiment.

Referring to FIG. 6, the second valve module 80 according to a first embodiment may have two inlet ports and three outlet ports, and may include two 3-way valves 81 and 83 whose first ports are interconnected.

In addition, a first one port among the three outlet ports in the second valve module 80 may be branched between the interconnected ports, and connected to the expansion valve 106 through the fifth line 15.

Here, a second port of a first 3-way valve 81 among the two 3-way valves 81 and 83 may be connected to the heat-exchanger 104 through the fourth line 14.

A remaining third port of the first 3-way valve 81 among the two 3-way valves 81 and 83 may be connected to the sixth line 16 through the sixth connection line 56, at the downstream end of the evaporator 108.

A second port of a second 3-way valve 83 among the two 3-way valves 81 and 83 may be connected to the gas-liquid separator 60 through the fourth connection line 54.

In addition, a remaining third port of the second 3-way valve 83 among the two 3-way valves 81 and 83 may be connected to the third line 13 through the fifth connection line 55, at the upstream end of the heat-exchanger 104.

In more detail, as shown in FIG. 6, the second valve module 80 according to a first embodiment may include a third control valve 81 that is the first 3-way valve 81, a fourth control valve 83 that is the second 3-way valve 83, and a second valve connection line 85.

Each of the fourth line 14 and the sixth connection line 56 may be connected to the third control valve 81.

Here, a first end of the fourth line 14 may be connected to the heat-exchanger 104. A second end of the fourth line 14 may be connected to the third control valve 81.

In addition, the first end of the sixth connection line 56 may be connected to the third control valve 81. The second end of the sixth connection line 56 may be connected to the sixth line 16 between the evaporator 108 and the accumulator 109.

Here, the third control valve 81 may be a 3-way valve capable of distributing flow amounts and controlling the flow of the supplied refrigerant.

In addition, each of the fourth connection line 54 and the fifth connection line 55 may be connected to the fourth control valve 83.

Here, the first end of the fourth connection line 54 may be connected to the fourth control valve 83. The second end of the fourth connection line 54 may be connected to the gas-liquid separator 60.

The first end of the fifth connection line 55 may be connected to the fourth control valve 83. The second end of the fifth connection line 55 may be connected to the third line 13 between the first valve module 70 and the heat-exchanger 104.

Here, the fourth control valve 83 may be a 3-way electronic expansion valve that selectively expands the refrigerant while controlling the flow of the supplied refrigerant.

In addition, the second valve connection line 85 may be connected to the third control valve 81 and the fourth control valve 83.

In other words, a first end of the second valve connection line 85 may be connected to the third control valve 81. A second end of the second valve connection line 85 may be connected to the fourth control valve 83.

The fifth line 15 may be connected to the second valve connection line 85 configured as such.

In the second valve module 80 according to a first embodiment configured as such, the third control valve 81 may selectively discharge the refrigerant introduced through the fourth line 14 through the sixth connection line 56 or the second valve connection line 85.

In addition, the fourth control valve 83 may selectively expand the refrigerant introduced through the fourth connection line 54.

Simultaneously, the fourth control valve 83 may selectively discharge the expanded refrigerant or the unexpanded refrigerant through the fifth connection line 55 or the second valve connection line 85.

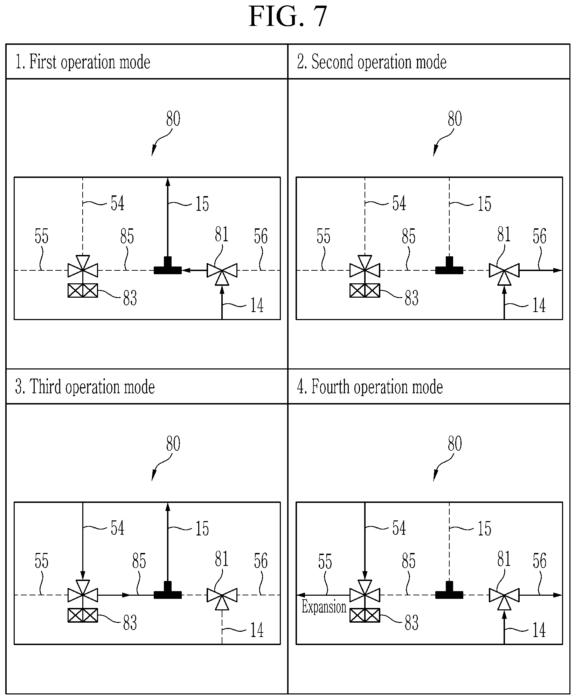

An operation of the second valve module 80 according to a first embodiment is described in detail with reference to FIG. 7.

FIG. 7 is an operation diagram of a second valve module in a heat pump system for a vehicle according to the first embodiment.

Referring to FIG. 7, in the plurality of operation modes, the second valve module 80 may operate as follows.

In the first operation mode among the plurality of operation modes, the third control valve 81 in the second valve module 80 may discharge the refrigerant introduced into the fourth line 14 to the fifth line 15 connected through the second valve connection line 85.

Simultaneously, the fourth control valve 83 may close the fourth connection line 54 and the fifth connection line 55. In addition, the fourth control valve 83 may close a portion of the second valve connection line 85 connecting the fifth line 15 and the fourth control valve 85.

In the second operation mode among the plurality of operation modes, the third control valve 81 in the second valve module 80 may discharge the refrigerant introduced through the fourth line 14 to the sixth connection line 56. In addition, the third control valve 81 may close the second valve connection line 85.

Simultaneously, the fourth control valve 83 may close the fourth connection line 54, the fifth connection line 55, and the second valve connection line 85.

In the third operation mode among the plurality of operation modes, the third control valve 81 in the second valve module 80 may close the fourth line 14 and the sixth connection line 56.

In addition, the third control valve 81 may close the portion of the second valve connection line 85 connecting the fifth line 15 and the fourth control valve 85.

Simultaneously, the fourth control valve 83 may discharge the refrigerant introduced through the fourth connection line 54 to the fifth line 15 connected through the second valve connection line 85, in an expanded or unexpanded state.

In other words, in the third operation mode, when the expansion valve 106 expands the refrigerant introduced through the fifth line 15, the fourth control valve 83 may discharge the introduced refrigerant to the second valve connection line 85 without expansion.

To the contrary, in the third operation mode, when the expansion valve 106 does not expand the refrigerant introduced through the fifth line 15, the fourth control valve 83 may expand the introduced refrigerant and discharge the expanded refrigerant to the second valve connection line 85.

In addition, in the fourth operation mode among the plurality of operation modes, the third control valve 81 in the second valve module 80 may discharge the refrigerant introduced through the fourth line 14 to the sixth connection line 56. In addition, the third control valve 81 may close the second valve connection line 85.

Simultaneously, the fourth control valve 83 may expand the refrigerant introduced through the fourth connection line 54. Thereafter, the fourth control valve 83 may discharge the expanded refrigerant to the fifth connection line 55.

In addition, the fourth control valve 83 may close the second valve connection line 85.

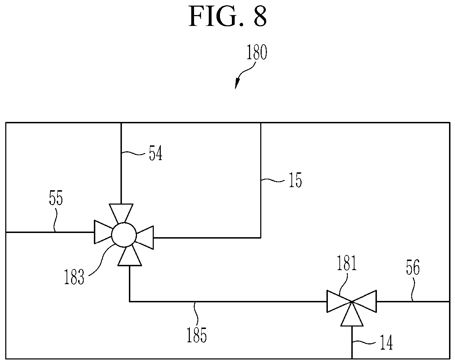

The second valve module 180 according to a second embodiment is described in detail with reference to FIG. 8.

FIG. 8 is a schematic diagram of a second valve module in a heat pump system for a vehicle according to the second embodiment.

Referring to FIG. 8, the second valve module 180 may have two inlet ports and three outlet ports, and may include a 3-way valve 181 and a 4-way valve 183 whose first ports are interconnected.

Here, a second port of the 3-way valve 181 may be connected to the heat-exchanger 104 through the fourth line 14.

A remaining third port of the 3-way valve 181 may be connected to the sixth line 16 through the sixth connection line 56, at the downstream end of the evaporator 108.

A second port of the 4-way valve 183 may be connected to the gas-liquid separator 60 through the fourth connection line 54.

A third port of the 4-way valve 183 may be connected to the third line 13 through the fifth connection line 55, at the upstream end of the heat-exchanger 104.

In addition, a remaining fourth port of the 4-way valve 183 may be connected to the expansion valve 106 through the fifth line 15.

In more detail, as shown in FIG. 8, the second valve module 180 according to the second embodiment may include a third control valve 181 that is the 3-way valve 181, a fourth control valve 183 that is the 4-way valve 183, and a second valve connection line 185.

In one embodiment, each of the fourth line 14 and the sixth connection line 56 may be connected to the third control valve 181.

Here, the first end of the fourth line 14 may be connected to the heat-exchanger 104. The second end of the fourth line 14 may be connected to the third control valve 181.

In addition, the first end of the sixth connection line 56 may be connected to the third control valve 181. The second end of the sixth connection line 56 may be connected to the sixth line 16 between the evaporator 108 and the accumulator 109.

Here, the third control valve 181 may be a 3-way valve capable of distributing flow amounts and controlling the flow of the supplied refrigerant.

In addition, each of the fifth line 15, the fourth connection line 54, and the fifth connection line 55 may be connected to the fourth control valve 183.

A first end of the fifth line 15 may be connected to the fourth control valve 183. A second end of the fifth line 15 may be connected to the expansion valve 106.

The first end of the fourth connection line 54 may be connected to the fourth control valve 183. The second end of the fourth connection line 54 may be connected to the gas-liquid separator 60.

The first end of the fifth connection line 55 may be connected to the fourth control valve 183. The second end of the fifth connection line 55 may be connected to the third line 13 between the first valve module 70 and the heat-exchanger 104.

In addition, the second valve connection line 185 may be connected to the third control valve 181 and the fourth control valve 183.

In other words, a first end of the second valve connection line 185 may be connected to the third control valve 181. A second end of the second valve connection line 185 may be connected to the fourth control valve 183.

Here, the fourth control valve 183 may be a 4-way electronic expansion valve that selectively expands the refrigerant while controlling the flow of the supplied refrigerant.

In the second valve module 180 according to a second embodiment configured as such, the third control valve 181 may selectively discharge the refrigerant introduced through the fourth line 14 through the sixth connection line 56 or the second valve connection line 185.

In addition, the fourth control valve 183 may selectively expand the refrigerant introduced through the fourth connection line 54 or the second valve connection line 185.

Simultaneously, the fourth control valve 183 may selectively discharge the expanded refrigerant or the unexpanded refrigerant through the fifth line 15, or the fifth connection line 55.

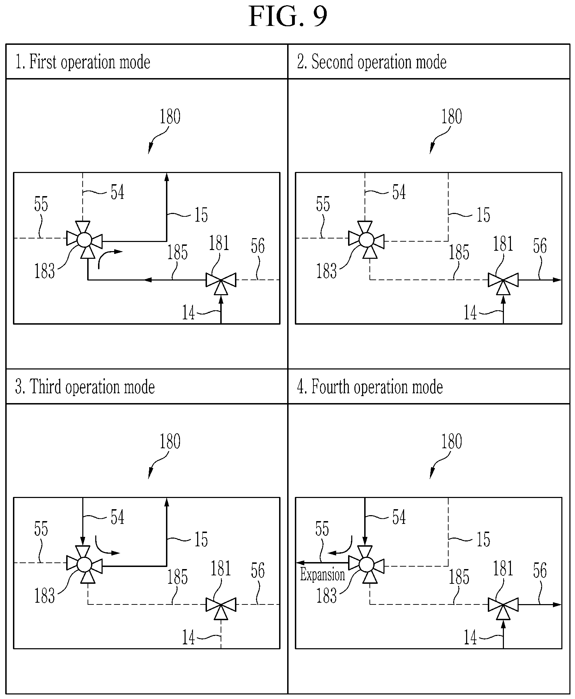

An operation of the second valve module 180 according to a second embodiment is described in detail with reference to FIG. 9.

FIG. 9 is an operation diagram of a second valve module in a heat pump system for a vehicle according to the second embodiment.

Referring to FIG. 9, in the plurality of operation modes, the second valve module 180 may operate as follows.

In the first operation mode among the plurality of operation modes, the third control valve 181 in the second valve module 180 may discharge the refrigerant introduced into the fourth line 14 to the fourth control valve 183 connected through the second valve connection line 185.

In addition, the third control valve 181 may close the sixth connection line 56.

Simultaneously, the fourth control valve 183 may close the fourth connection line 54 and the fifth connection line 55.

In addition, the fourth control valve 183 may discharge the refrigerant introduced into the second valve connection line 185 to the fifth line 15, in an expanded or unexpanded state.

In other words, in the first operation mode, when the expansion valve 106 expands the refrigerant introduced through the fifth line 15, the fourth control valve 183 may discharge the introduced refrigerant to the fifth line 15 without expansion.

To the contrary, in the first operation mode, when the expansion valve 106 does not expand the refrigerant introduced through the fifth line 15, the fourth control valve 183 may expand the introduced refrigerant and discharge the expanded refrigerant to the fifth line 15.

In the second operation mode among the plurality of operation modes, the third control valve 181 in the second valve module 180 may discharge the refrigerant introduced through the fourth line 14 to the sixth connection line 56. In addition, the third control valve 181 may close the second valve connection line 185.

Simultaneously, the fourth control valve 183 may close the fifth line 15, the fourth connection line 54, the fifth connection line 55, and the second valve connection line 185.

In the third operation mode among the plurality of operation modes, the third control valve 181 in the second valve module 180 may close the fourth line 14, the sixth connection line 56, and the second valve connection line 185.

Simultaneously, the fourth control valve 183 may discharge the refrigerant introduced through the fourth connection line 54 to the fifth line 15, in an expanded or unexpanded state.

In other words, in the third operation mode, when the expansion valve 106 expands the refrigerant introduced through the fifth line 15, the fourth control valve 183 may discharge the introduced refrigerant to the fifth line 15 without expansion.

To the contrary, in the third operation mode, when the expansion valve 106 does not expand the refrigerant introduced through the fifth line 15, the fourth control valve 183 may expand the introduced refrigerant and discharge the expanded refrigerant to the fifth line 15.

In addition, in the fourth operation mode among the plurality of operation modes, the third control valve 181 in the second valve module 180 may discharge the refrigerant introduced through the fourth line 14 to the sixth connection line 56. In addition, the third control valve 181 may close the second valve connection line 185.

Simultaneously, the fourth control valve 183 may expand the refrigerant introduced through the fourth connection line 54. Thereafter, the fourth control valve 183 may discharge the expanded refrigerant to the fifth connection line 55.

In addition, the fourth control valve 183 may close the fifth line 15 and the second valve connection line 185.

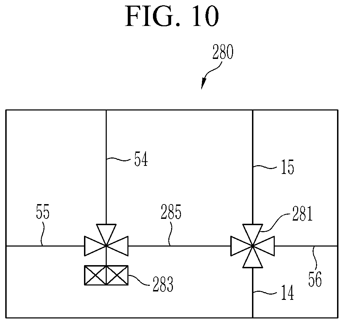

In addition, the second valve module 280 according to a third embodiment is described in detail with reference to Figure 10.

FIG. 10 is a schematic diagrams of a second valve module in a heat pump system for a vehicle according to the third embodiment.

Referring to FIG. 10, the second valve module 280 may have two inlet ports and three outlet ports, and may include a 4-way valve 281 and a 3-way valve 283 whose first ports are interconnected.

Here, a second port of the 4-way valve 281 may be connected to the heat-exchanger 104 through the fourth line 14.

A third port of the 4-way valve 281 may be connected to the expansion valve 106 through the fifth line 15.

A remaining fourth port of the 4-way valve 281 may be connected to the sixth line 16 through the sixth connection line 56, at the downstream end of the evaporator 108.

A second port of the 3-way valve 283 may be connected to the gas-liquid separator 60 through the fourth connection line 54.

A remaining third port of the 3-way valve 283 may be connected to the third line 13 through the fifth connection line 55, at the upstream end of the heat-exchanger 104.

In more detail, as shown in FIG. 10, the second valve module 280 according to the third embodiment may include a third control valve 281 that is the 4-way valve 281, a fourth control valve 283 that is the 3-way valve 283, and a second valve connection line 285.

In one embodiment, each of the fourth line 14, the fifth line 15, and the sixth connection line 56 may be connected to the third control valve 281.

Here, the first end of the fourth line 14 may be connected to the heat-exchanger 104. The second end of the fourth line 14 may be connected to the third control valve 281.

The first end of the fifth line 15 may be connected to the third control valve 283. The second end of the fifth line 15 may be connected to the expansion valve 106.

In addition, the first end of the sixth connection line 56 may be connected to the third control valve 181. The second end of the sixth connection line 56 may be connected to the sixth line 16 between the evaporator 108 and the accumulator 109.

Here, the third control valve 281 may be a 4-way valve capable of distributing flow amounts and controlling the flow of the supplied refrigerant.

In addition, each of the fourth connection line 54 and the fifth connection line 55 may be connected to the fourth control valve 283.

The first end of the fourth connection line 54 may be connected to the fourth control valve 283. The second end of the fourth connection line 54 may be connected to the gas-liquid separator 60.

The first end of the fifth connection line 55 may be connected to the fourth control valve 283. The second end of the fifth connection line 55 may be connected to the third line 13 between the first valve module 70 and the heat-exchanger 104.

In addition, the second valve connection line 285 may be connected to the third control valve 281 and the fourth control valve 283.

In one embodiment, a first end of the second valve connection line 285 may be connected to the third control valve 281. A second end of the second valve connection line 285 may be connected to the fourth control valve 283.

Here, the fourth control valve 283 may be a 3-way electronic expansion valve that selectively expands the refrigerant while controlling the flow of the supplied refrigerant.

In the second valve module 280 according to the third embodiment configured as such, the third control valve 281 may selectively discharge the refrigerant introduced through the fourth line 14 or the second valve connection line 285 through the fifth line 15, or the sixth connection line 56.

In addition, the fourth control valve 283 may selectively expand the refrigerant introduced through the fourth connection line 54.

Simultaneously, the fourth control valve 283 may selectively discharge the expanded refrigerant or the unexpanded refrigerant through the fifth connection line 55 or the second valve connection line 285.

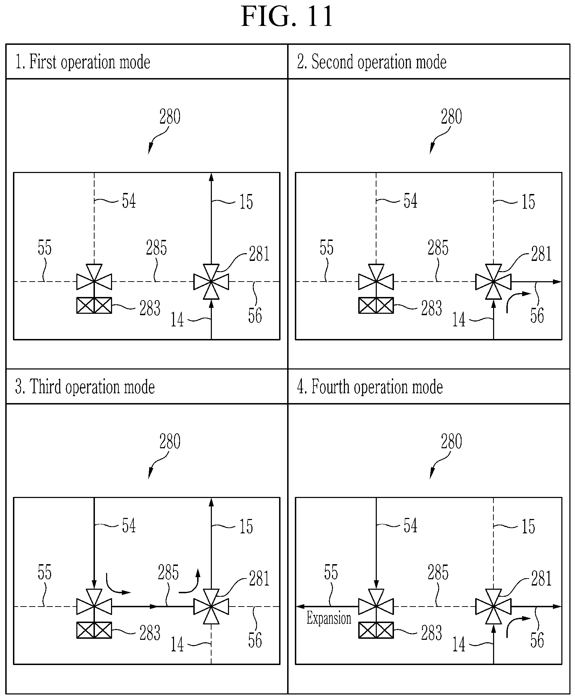

An operation of the second valve module 280 according to a third embodiment is described in detail with reference to FIG. 11.

FIG. 11 is an operation diagram of a second valve module in a heat pump system for a vehicle according to the third embodiment.

Referring to FIG. 11, in the plurality of operation modes, the second valve module 280 may operate as follows.

In the first operation mode among the plurality of operation modes, the third control valve 281 in the second valve module 280 may discharge the refrigerant introduced into the fourth line 14 to the fifth line 15.

In addition, the third control valve 281 may close the sixth connection line 56 and the second valve connection line 285.

Simultaneously, the fourth control valve 283 may close the fourth connection line 54, the fifth connection line 55, and the second valve connection line 285.

In the second operation mode among the plurality of operation modes, the third control valve 281 in the second valve module 280 may discharge the refrigerant introduced through the fourth line 14 to the sixth connection line 56.

In addition, the third control valve 281 may close the fifth line 15 and the second valve connection line 285.

Simultaneously, the fourth control valve 283 may close the fourth connection line 54, the fifth connection line 55, and the second valve connection line 285.

In the third operation mode among the plurality of operation modes, the third control valve 281 in the second valve module 280 may close the fourth line 14 and the sixth connection line 56.

In addition, the third control valve 281 may open the fifth line 15 and the second valve connection line 285.

Simultaneously, the fourth control valve 283 may discharge the refrigerant introduced through the fourth connection line 54 to the second valve connection line 285, in an expanded or unexpanded state.

The refrigerant discharged to the second valve connection line 285 may be discharged to the fifth line 15 connected through the third control valve 281.

In the third operation mode, when the expansion valve 106 expands the refrigerant introduced through the fifth line 15, the fourth control valve 283 may discharge the introduced refrigerant to the second valve connection line 285 without expansion.

To the contrary, in the third operation mode, when the expansion valve 106 does not expand the refrigerant introduced through the fifth line 15, the fourth control valve 283 may expand the introduced refrigerant and discharge the expanded refrigerant to the second valve connection line 285.

In addition, in the fourth operation mode among the plurality of operation modes, the third control valve 281 in the second valve module 280 may discharge the refrigerant introduced through the fourth line 14 to the sixth connection line 56.

In addition, the third control valve 281 may close the fifth line 15 and the second valve connection line 285.

Simultaneously, the fourth control valve 283 may expand the refrigerant introduced through the fourth connection line 54. Thereafter, the fourth control valve 283 may discharge the expanded refrigerant to the fifth connection line 55.

In addition, the fourth control valve 283 may close the second valve connection line 285.

According to the heat pump system according to an embodiment configured as such, the flow of the refrigerant may be controlled depending on the plurality of operation modes for temperature adjustment of the vehicle interior.

In other words, while adjusting the flow of the refrigerant of the first valve module 70 and the second valve module 80 according to a first embodiment, the refrigerant may be selectively expanded.

Here, at least one among the first valve module 70, the second valve module 80, and the expansion valve 106 according to a first embodiment may selectively operate in the plurality of operation modes, to selectively expand the refrigerant while controlling the flow of the refrigerant.

In this embodiment, the plurality of operation modes may include the first operation mode to the fourth operation mode.

In the first operation mode, the vehicle interior may be cooled without operating the gas-liquid separator 60.

In the second operation mode, the vehicle interior may be heated without operating the gas-liquid separator 60.

In the third operation mode, the vehicle interior may be cooled by operating the gas-liquid separator 60.

In the fourth operation mode, the vehicle interior may be heated by operating the gas-liquid separator 60.

Here, in the first operation mode and the third operation mode, the heat-exchanger 104 may condense the supplied refrigerant.

To the contrary, in the second operation mode and the fourth operation mode, the heat-exchanger 104 may evaporate the supplied refrigerant.

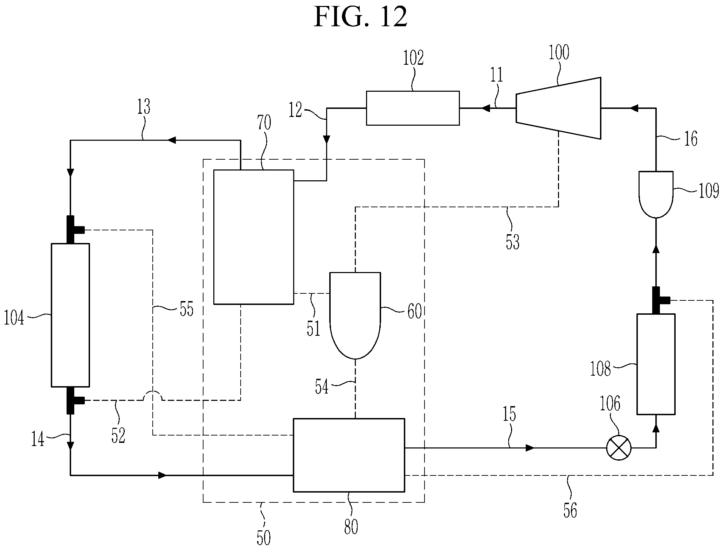

An operation and action in each operation mode of the heat pump system according to an embodiment is described in detail with reference to FIG. 12 to FIG. 15.

In this embodiment, an operation according to the first operation mode for cooling the vehicle interior without operating the gas-liquid separator 60 is described in detail with reference to FIG. 12.

FIG. 12 is an operation diagram according to the first operation mode in a heat pump system for a vehicle according to an embodiment.

Referring to FIG. 12, in the first operation mode, the compressor 100 may be operated in order to cool the vehicle interior.

Here, the first line 11 and the sixth line 16 may be opened. At the same time, the second line 12 and the third line 13 may be opened by the operation of the first valve module 70.

In this embodiment, the fourth line 14 and the fifth line 15 may be opened by the operation of the second valve module 80.

Accordingly, the first to sixth lines 11, 12, 13, 14, 15, and 16 may be interconnected with the first valve module 70 by the operation of the second valve module 80.

In one form, the first connection line 51 and the second connection line 52 may be closed by the operation of the first valve module 70.

Simultaneously, the third connection line 53 may be closed. In addition, the fourth connection line 54, the fifth connection line 55, and the sixth connection line 56 may be closed by the operation of the second valve module 80.

Then, the refrigerant discharged from the compressor 100 may be supplied to the condenser 102 along the first line 11. The refrigerant discharged from the condenser 102 may be introduced into the first valve module 70 along the second line 12.

Here, the first valve module 70 may flow the refrigerant introduced from the condenser 102 through the second line 12, to the third line 13 without expansion.

The refrigerant having flowed along the third line 13 may be introduced into the heat-exchanger 104.

In one embodiment, the first valve module 70 may supply the refrigerant introduced from the condenser 102 to the heat-exchanger 104 without expansion.

The refrigerant introduced into the heat-exchanger 104 may be condensed through heat-exchange with the operation fluid such as the ambient air or the coolant while passing through the heat-exchanger 104.

Then, the refrigerant discharged from the heat-exchanger 104 may be introduced into the second valve module 80 along the fourth line 14.

The refrigerant discharged from the second valve module 80 may be introduced into the expansion valve 106 along the opened fifth line 15. Thereafter, the refrigerant may be introduced into the evaporator 108.

In this embodiment, the second valve module 80 may supply the refrigerant introduced from the heat-exchanger 104 to the expansion valve 106 without expansion. Then, the expansion valve 106 may expand the supplied refrigerant and supply the expanded refrigerant to the evaporator 108.

To the contrary, the second valve module 80 may expand the refrigerant introduced from the heat-exchanger 104 and supply the expanded refrigerant to the expansion valve 106. Then, the expansion valve 106 may supply the supplied refrigerant to the evaporator 108 without expansion.

In other words, at least one among the second valve module 80 and the expansion valve 106 may expand the introduced refrigerant such that the expanded refrigerant may be supplied into the evaporator 108. Accordingly, the expanded refrigerant may be supplied to the evaporator 108.

Here, the ambient air introduced into the HVAC module may be cooled while passing through the evaporator 108 by the refrigerant of the low-temperature state introduced into the evaporator 108.

At this time, the opening/closing door of the HVAC module may close a portion toward the condenser 102 such that the cooled ambient air may not pass through the condenser 102. Therefore, the cooled ambient air may cool the vehicle interior by being directly introduced into the vehicle interior.

Meanwhile, the refrigerant having passed through the evaporator 108 may pass through the accumulator 109 along the sixth line 16. In addition, the refrigerant having passed through the accumulator 109 may be supplied to the compressor 100.

The refrigerant having passed through the evaporator 108 may be introduced into the compressor 100. The introduced refrigerant may be compressed by an operation of the compressor 100.

The refrigerant compressed at the compressor 100 may be supplied to the first valve module 70 along the second line 12, after passing through the condenser 102 along the first line 11.

Then, the heat pump system may repeatedly perform the above-described processes.

In other words, while repeatedly performing the above-described operation, the heat pump system may smoothly cool the vehicle interior without an operation of the gas-liquid separator 60 included in the gas injection device 50.

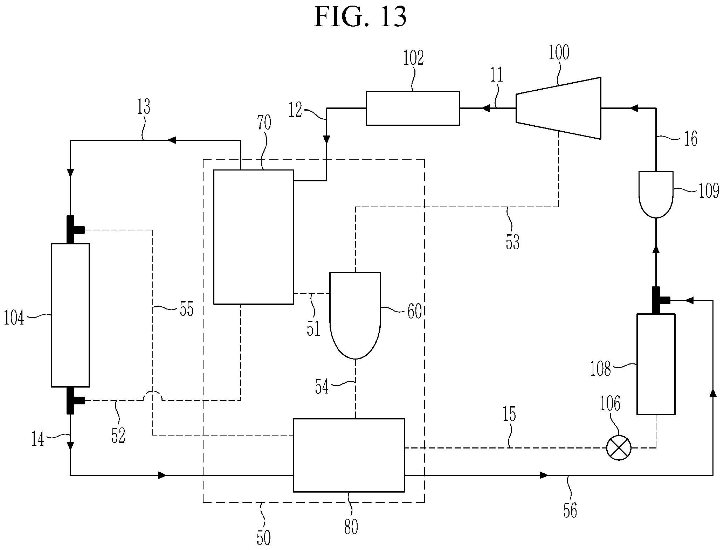

In this embodiment, an operation according to the second operation mode for heating the vehicle interior without operating the gas-liquid separator 60 is described in detail with reference to FIG. 13.

FIG. 13 is an operation diagram according to the second operation mode in a heat pump system for a vehicle according to an embodiment.

Referring to FIG. 13, in the second operation mode, the compressor 100 may be operated in order to heat the vehicle interior.

Here, the first line 11 and the sixth line 16 may be opened. At the same time, the second line 12 and the third line 13 may be opened by the operation of the first valve module 70.

In this embodiment, the fourth line 14 may be opened by the operation of the second valve module 80. At the same time, the fifth line 15 may be closed by the operation of the second valve module 80.

The first connection line 51 and the second connection line 52 may be closed by the operation of the first valve module 70.

Simultaneously, the third connection line 53 may be closed. In addition, the fourth connection line 54 and the fifth connection line 55 may be closed by the operation of the second valve module 80.

In addition, the sixth connection line 56 may be opened by the operation of the second valve module 80.

Accordingly, the first to the fourth lines 11, 12, 13, and 14, the sixth connection line 56, and the sixth line 16 may be interconnected with the first valve module 70 by the operation of the second valve module 80.

Then, the refrigerant discharged from the compressor 100 may be supplied to the condenser 102 along the first line 11. The refrigerant discharged from the condenser 102 may be introduced into the first valve module 70 along the second line 12.

Here, the first valve module 70 may expand the refrigerant introduced from the condenser 102 through the second line 12 and flow the expanded refrigerant to the third line 13.

The refrigerant having flowed along the third line 13 may be introduced into the heat-exchanger 104.

In other words, the first valve module 70 may expand the refrigerant introduced from the condenser 102 and supply the expanded refrigerant to the heat-exchanger 104.

The refrigerant introduced into the heat-exchanger 104 may be evaporated through heat-exchange with the operation fluid such as the ambient air or the coolant while passing through the heat-exchanger 104.

Then, the refrigerant discharged from the heat-exchanger 104 may be introduced into the second valve module 80 along the fourth line 14.

The refrigerant discharged from the second valve module 80 may flow along the opened sixth connection line 56.

Here, the second valve module 80 may flow the refrigerant introduced from the heat-exchanger 104 through the fourth line 14, to the sixth connection line 56 without expansion. In addition, the refrigerant having flowed along the sixth connection line 56 may be introduced into the sixth line 16.

In other words, the second valve module 80 may supply, the refrigerant introduced from the heat-exchanger 104, from the downstream end of the evaporator 108 to the sixth line 16 without expansion.

The refrigerant having flowed along the sixth line 16 may pass through the accumulator 109. In addition, the refrigerant having passed through the accumulator 109 may be supplied to the compressor 100.

The refrigerant evaporated at the heat-exchanger 104 may be introduced into the compressor 100. The refrigerant introduced into the compressor 100 may be compressed by the operation of the compressor 100. Thereafter, the heat pump system may repeatedly perform the above-described processes.

Meanwhile, the refrigerant compressed at the compressor 100 may be supplied to the condenser 102 along the first line 11. Here, the refrigerant supplied to the condenser 102 may increase the temperature of the ambient air introduced into the HVAC module.

The opening/closing door may be opened such that the ambient air having been introduced into the HVAC module and having passed through the evaporator 108 may pass through the condenser 102.

Accordingly, when passing through the evaporator 108 that is not supplied with the refrigerant, the ambient air introduced from the outside may be introduced in the room-temperature state that is not cooled. The introduced ambient air may be converted to high-temperature state while passing through the condenser 102 and then introduced into the vehicle interior, thereby implementing heating of the vehicle interior.

While repeatedly performing such an operation, the heat pump system may heat the vehicle interior without the operation of the gas-liquid separator 60 included in the gas injection device 50.

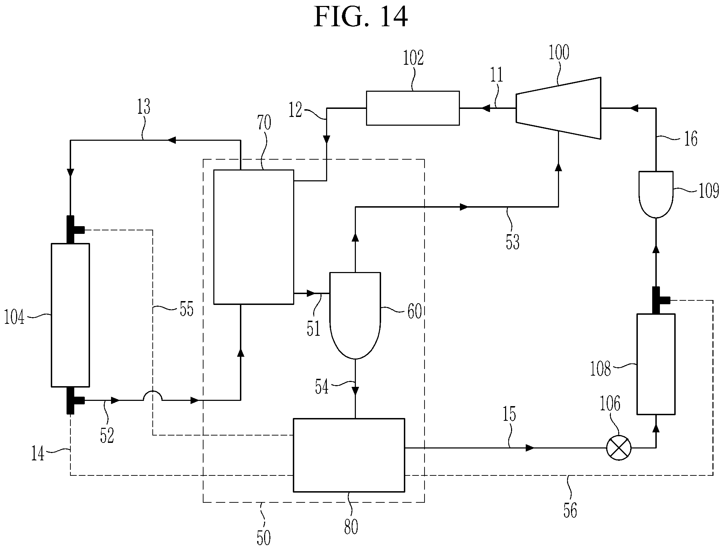

In a heat pump system according to an embodiment, an operation according to the third operation mode for cooling the vehicle interior by operating the gas injection device 50 is described in detail with reference to FIG. 14.

FIG. 14 is an operation diagram according to the third operation mode in a heat pump system for a vehicle according to an embodiment.

Referring to FIG. 14, in the third operation mode, the compressor 100 may be operated in order to cool the vehicle interior.

Here, the first line 11 and the sixth line 16 may be opened. At the same time, the second line 12 and the third line 13 may be opened by the operation of the first valve module 70.

In this embodiment, the fourth line 14 may be closed by the operation of the second valve module 80. At the same time, the fifth line 15 may be opened by the operation of the second valve module 80.

Meanwhile, the first connection line 51 and the second connection line 52 may be opened by the operation of the first valve module 70.

Simultaneously, the third connection line 53 and the fourth connection line 54 may be opened. In addition, the fifth connection line 55 and the sixth connection line 56 may be closed by the operation of the second valve module 80.

Then, the refrigerant discharged from the compressor 100 may be supplied to the condenser 102 along the first line 11. The refrigerant discharged from the condenser 102 may be introduced into the first valve module 70 along the second line 12.

Here, the first valve module 70 may flow the refrigerant introduced from the condenser 102 through the second line 12, to the third line 13 without expansion.

The refrigerant having flowed along the third line 13 may be introduced into the heat-exchanger 104.

In other words, the first valve module 70 may supply the refrigerant introduced from the condenser 102 to the heat-exchanger 104 without expansion.

The refrigerant introduced into the heat-exchanger 104 may be condensed through heat-exchange with the operation fluid such as the ambient air or the coolant while passing through the heat-exchanger 104.

Then, the refrigerant discharged from the heat-exchanger 104 may be introduced into the first valve module 70 along the second connection line 52.

Here, the first valve module 70 may expand the refrigerant introduced from the heat-exchanger 104 through the second connection line 52 and flow the expanded refrigerant to the first connection line 51.

The refrigerant having flowed along the first connection line 51 may be supplied to the gas-liquid separator 60.

The first valve module 70 may expand the refrigerant introduced from the heat-exchanger 104 and supply the expanded refrigerant to the gas-liquid separator 60.

At this time, the gas-liquid separator 60 may supply the gaseous refrigerant among the refrigerant supplied through the first connection line 51 to the compressor 100 through the opened third connection line 53.

The gas injection device 50 may flow the gaseous refrigerant separated while passing through the gas-liquid separator 60 back to the compressor 100 through the third connection line 53, and thereby may increase the flow amount of the refrigerant circulating along the opened lines and the connection lines.

Meanwhile, the gas-liquid separator 60 may discharge the liquid state refrigerant among the refrigerant supplied through the first connection line 51 to the second valve module 80 connected through the fourth connection line 54.

In other words, the gas-liquid separator 60 may supply the gaseous refrigerant to the compressor 100, and supply the liquid refrigerant to the second valve module 80.

The refrigerant having passed through the second valve module 80 may be introduced into the expansion valve 106 along the opened fifth line 15. Thereafter, the refrigerant may be introduced into the evaporator 108.

Meanwhile, in this embodiment, the second valve module 80 may supply the refrigerant introduced from the gas-liquid separator 60 to the expansion valve 106 without expansion. Then, the expansion valve 106 may expand the supplied refrigerant and supply the expanded refrigerant to the evaporator 108.

To the contrary, the second valve module 80 may expand the refrigerant introduced from the gas-liquid separator 60 and supply the expanded refrigerant to the expansion valve 106. Then, the expansion valve 106 may supply the supplied refrigerant to the evaporator 108 without expansion.

Here, at least one among the second valve module 80 and the expansion valve 106 may expand the introduced refrigerant such that the expanded refrigerant may be supplied into the evaporator 108. Accordingly, the expanded refrigerant may be supplied to the evaporator 108.

Here, the ambient air introduced into the HVAC module may be cooled while passing through the evaporator 108 by the refrigerant of the low-temperature state introduced into the evaporator 108.

At this time, the opening/closing door of the HVAC module may close a portion toward the condenser 102 such that the cooled ambient air may not pass through the condenser 102. Therefore, the cooled ambient air may cool the vehicle interior by being directly introduced into the vehicle interior.

Meanwhile, the refrigerant having passed through the evaporator 108 may pass through the accumulator 109 along the sixth line 16. In addition, the refrigerant having passed through the accumulator 109 may be supplied to the compressor 100.

In other words, the refrigerant having passed through the evaporator 108 and the refrigerant supplied from the gas-liquid separator 60 through the third connection line 53 may be introduced into the compressor 100. The introduced refrigerant may be compressed by the operation of the compressor 100.

The refrigerant compressed at the compressor 100 may be supplied to the first valve module 70 along the second line 12, after passing through the condenser 102 along the first line 11.

Then, the heat pump system may repeatedly perform the above-described processes.

In other words, while repeatedly performing the above-described operation, the heat pump system may operate the gas-liquid separator 60 included in the gas injection device 50, and thereby increase the flow amount of the refrigerant flowing along the first, second, third, fifth, and sixth lines 11, 12, 13, 15, and 16 and the first, second, third, and fourth connection lines 51, 52, 53, and 54.

In addition, the heat pump system may increase the flow amount of the refrigerant flowing along the first, second, third, fifth, and sixth lines 11, 12, 13, 15, and 16 and the first, second, third, and fourth connection lines 51, 52, 53, and 54, and thereby improve the overall cooling performance and efficiency, thereby efficiently cooling the vehicle interior.

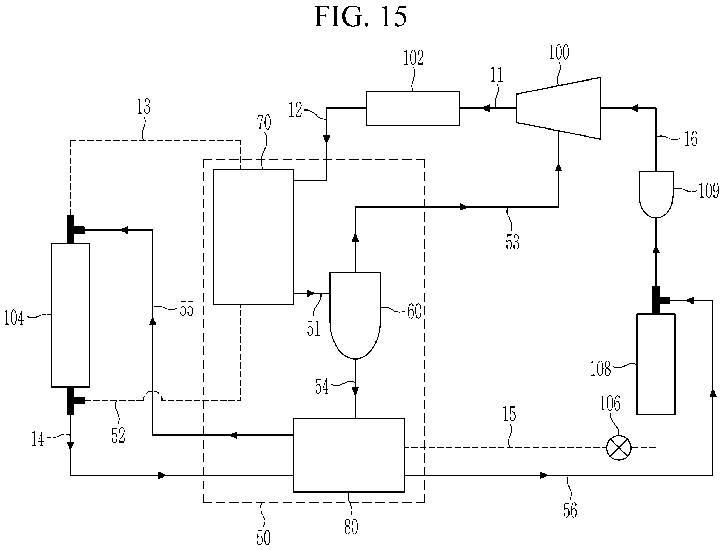

In this embodiment, an operation according to the fourth operation mode for heating the vehicle interior by operating the gas injection device 50 is described in detail with reference to FIG. 15.

FIG. 15 is an operation diagram according to the fourth operation mode in a heat pump system for a vehicle according to an embodiment.

Referring to FIG. 15, in the fourth operation mode, the compressor 100 may be operated in order to heat the vehicle interior.

Here, the first line 11 and the sixth line 16 may be opened. At the same time, the second line 12 may be opened by the operation of the first valve module 70.

The third line 13 may be closed by the operation of the first valve module 70. In addition, the fourth line 14 may be opened by the operation of the second valve module 80. In addition, the fifth line 15 may be closed by the operation of the second valve module 80.

Meanwhile, the first connection line 51 may be opened by the operation of the first valve module 70. At the same time, the second connection line 52 may be closed by the operation of the first valve module 70.

Simultaneously, the third connection line 53 and the fourth connection line 54 may be opened. In addition, the fifth connection line 55 and the sixth connection line 56 may be opened by the operation of the second valve module 80.

Then, the refrigerant discharged from the compressor 100 may be supplied to the condenser 102 along the first line 11. The refrigerant discharged from the condenser 102 may be introduced into the first valve module 70 along the second line 12.

Here, the first valve module 70 may expand the refrigerant introduced from the condenser 102 through the second line 12 and flow the expanded refrigerant to the first connection line 51.

The refrigerant having flowed along the first connection line 51 may be supplied to the gas-liquid separator 60.

The first valve module 70 may expand the refrigerant introduced from the condenser 102 and supply the expanded refrigerant to the gas-liquid separator 60.

At this time, the gas-liquid separator 60 may supply the gaseous refrigerant among the refrigerant supplied through the first connection line 51 to the compressor 100 through the opened third connection line 53.

The gas injection device 50 may flow the gaseous refrigerant separated while passing through the gas-liquid separator 60 back to the compressor 100 through the third connection line 53, and thereby may increase the flow amount of the refrigerant circulating along the opened lines and the connection lines.

Meanwhile, the gas-liquid separator 60 may discharge the liquid state refrigerant among the refrigerant supplied through the first connection line 51 to the second valve module 80 connected through the fourth connection line 54.

In other words, the gas-liquid separator 60 may supply the gaseous refrigerant to the compressor 100, and supply the liquid refrigerant to the second valve module 80.

The refrigerant having passed through the second valve module 80 may be introduced into the heat-exchanger 104 along the opened fifth connection line 55.

Here, the second valve module 80 may expand the refrigerant introduced from the gas-liquid separator 60 through the fourth connection line 54 and flow the expanded refrigerant to the fifth connection line 55.

The refrigerant flowing through the fifth connection line 55 may be introduced into the heat-exchanger 104.

Through such an operation, the second valve module 80 may expand the refrigerant introduced from the gas-liquid separator 60 and supply the expanded refrigerant to the heat-exchanger 104.

The heat-exchanger 104 may evaporate the introduced refrigerant through heat-exchange with the operation fluid such as the ambient air or the coolant. Thereafter, the refrigerant discharged from the heat-exchanger 104 may be introduced into the fourth line 14.

The refrigerant having flowed along the fourth line 14 may be introduced into the second valve module 80. Here, the second valve module 80 may flow the refrigerant introduced from the heat-exchanger 104 through the fourth line 14, to the sixth connection line 56 without expansion.

In addition, the refrigerant having flowed along the sixth connection line 56 may be introduced into the sixth line 16.

The second valve module 80 may supply, the refrigerant introduced from the heat-exchanger 104, from the downstream end of the evaporator 108 to the sixth line 16 without expansion.

The refrigerant having flowed along the sixth line 16 may pass through the accumulator 109. In addition, the refrigerant having passed through the accumulator 109 may be supplied to the compressor 100.

In other words, the refrigerant evaporated at the heat-exchanger 104 may be introduced into the compressor 100. The refrigerant introduced into the compressor 100 may be compressed by the operation of the compressor 100. Thereafter, the heat pump system may repeatedly perform the above-described processes.

In other words, the refrigerant having passed through the heat-exchanger 104 and the refrigerant supplied from the gas-liquid separator 60 through the third connection line 53 may be introduced into the compressor 100. The introduced refrigerant may be compressed by the operation of the compressor 100.

The refrigerant compressed at the compressor 100 may be supplied to the condenser 102 along the first line 11. Here, the refrigerant supplied to the condenser 102 may increase the temperature of the ambient air introduced into the HVAC module.

The opening/closing door may be opened such that the ambient air having been introduced into the HVAC module and having passed through the evaporator 108 may pass through the condenser 102.

Accordingly, when passing through the evaporator 108 that is not supplied with the refrigerant, the ambient air introduced from the outside may be introduced in the room-temperature state that is not cooled. The introduced ambient air may be converted to high-temperature state while passing through the condenser 102 and then introduced into the vehicle interior, thereby implementing heating of the vehicle interior.

As such, in the heat pump system according to an embodiment, the gas-liquid separator 60 included in the gas injection device 50 is operated together, and accordingly, the overall heating performance and efficiency may be improved.

In addition, the present disclosure may not only minimize the usage of a separate electric heater but also improve the heating efficiency and performance.

In addition, the gas injection device 50 may increase the flow amount of the refrigerant flowing along the first, second, fourth and sixth lines 11, 12, 14, and 16 and the first, third, fourth, fifth and sixth connection lines 51, 53, 54, 55, and 56, and thereby may maximize the heating performance.

Therefore, as described above, when a heat pump system for a vehicle according to an embodiment is applied, the flow amount of the refrigerant may be increased by employing the gas injection device 50 configured to selectively operate in at least one mode selected for air conditioning of the vehicle interior, and thereby cooling and the heating performance may be improved.

In addition, according to the present disclosure, the performance of the system by using the gas injection device 50 may be maximized while minimizing the required components, and accordingly, streamlining and simplification of the system may be achieved.

In addition, according to the present disclosure, through streamlining of an entire system, it is possible to reduce manufacturing cost and weight and improve space utilization.

While this present disclosure has been described in connection with what is presently considered to be practical exemplary embodiments, it is to be understood that the present disclosure is not limited to the disclosed embodiments. On the contrary, it is intended to cover various modifications and equivalent arrangements included within the spirit and scope of the appended claims.

### <Description of symbols>

11, 12, 13: first, second, and third lines
14, 15, 16: fourth, fifth, and sixth lines
50: gas injection device
51, 52, 53: first, second, and third connection lines
54, 55, 56: fourth, fifth, and sixth connection lines
60: gas-liquid separator
70: first valve module
80: second valve module
100: compressor
102: condenser
104: heat-exchanger
106: expansion valve
108: evaporator
109: accumulator

## Claims

1. A heat pump system for a vehicle, comprising:
a compressor, a condenser, a heat-exchanger, an expansion valve, and an evaporator that are connected through a refrigerant line, wherein, optionally, an accumulator is disposed between the evaporator and the compressor;
a gas-liquid separator configured to separate a refrigerant into a gaseous refrigerant and a liquid refrigerant and selectively supply the gaseous refrigerant to the compressor;
a first valve module disposed on the refrigerant line between the condenser and the heat-exchanger and connected to the condenser and the heat-exchanger, respectively, wherein the first valve module is connected to the refrigerant line at a downstream end of the heat-exchanger and the gas-liquid separator, respectively; and
a second valve module disposed on the refrigerant line between the heat-exchanger and the expansion valve and connected to the heat-exchanger and the expansion valve, respectively, wherein the second valve module is connected to the refrigerant line at an upstream end of the heat-exchanger and the gas-liquid separator, respectively, and connected to the refrigerant line at a downstream end of the evaporator,
wherein at least one of the first valve module or the second valve module is configured to selectively expand the refrigerant while adjusting a flow of the refrigerant based on a plurality of operation modes.

2. The heat pump system of claim 1, wherein the first valve module has two inlet ports and two outlet ports and comprises two 3-way valves whose first ports are interconnected, wherein, optionally:
a second port of a first 3-way valve among the two 3-way valves is connected to the condenser;
a remaining third port of the first 3-way valve among the two 3-way valves is connected to the heat-exchanger;
a second port of a second 3-way valve among the two 3-way valves is connected to the refrigerant line at the downstream end of the heat-exchanger; and
a remaining third port of the second 3-way valve among the two 3-way valves is connected to the gas-liquid separator.

3. The heat pump system of claim 1 or 2, wherein the first valve module has two inlet ports and two outlet ports and comprises one 4-way valve, wherein, optionally:
a first port of the one 4-way valve is connected to the condenser;
a second port of the one 4-way valve is connected to the heat-exchanger;
a third port of the one 4-way valve is connected to the refrigerant line at the downstream end of the heat-exchanger; and
a remaining fourth port of the one 4-way valve is connected to the gas-liquid separator.

4. The heat pump system of one of claims 1-3, wherein:
the second valve module has two inlet ports and three outlet ports and comprises two 3-way valves whose first ports are interconnected; and
a first one port among the three outlet ports is branched between the interconnected first ports and connected to the expansion valve, wherein, optionally:
a second port of a first 3-way valve among the two 3-way valves is connected to the gas-liquid separator;
a remaining third port of the first 3-way valve among the two 3-way valves is connected to the refrigerant line at the upstream end of the heat-exchanger;
a second port of a second 3-way valve among the two 3-way valves is connected to the heat-exchanger; and
a remaining third port of the second 3-way valve among the two 3-way valves is connected to the refrigerant line at the downstream end of the evaporator.

5. The heat pump system of one of claims 1-4, wherein the second valve module has two inlet ports and three outlet ports and comprises a 3-way valve and a 4-way valve whose first ports are interconnected.

6. The heat pump system of claim 5, wherein (Alternative I):
a second port of the 3-way valve is connected to the heat-exchanger;
a remaining third port of the 3-way valve is connected to the refrigerant line at the downstream end of the evaporator;
a second port of the 4-way valve is connected to the gas-liquid separator;
a third port of the 4-way valve is connected to the refrigerant line at the upstream end of the heat-exchanger; and
a remaining fourth port of the 4-way valve is connected to the expansion valve, or wherein (Alternative II):
a second port of the 3-way valve is connected to the gas-liquid separator;
a remaining third port of the 3-way valve is connected to the refrigerant line at the upstream end of the heat-exchanger;
a second port of the 4-way valve is connected to the heat-exchanger;
a third port of the 4-way valve is connected to the expansion valve; and
a remaining fourth port of the 4-way valve is connected to the refrigerant line at the downstream end of the evaporator.

7. The heat pump system of one of claims 1-6, wherein, in a first operation mode among the plurality of operation modes:
the first valve module is configured to supply the refrigerant introduced from the condenser to the heat-exchanger without expansion;
the second valve module is configured to supply the refrigerant introduced from the heat-exchanger to the expansion valve without expansion; and
the expansion valve is configured to expand the supplied refrigerant and supply the expanded refrigerant to the evaporator.

8. The heat pump system of one of claims 1-6, wherein, in a first operation mode among the plurality of operation modes:
the first valve module is configured to supply the refrigerant introduced from the condenser to the heat-exchanger without expansion;
the second valve module is configured to expand the refrigerant introduced from the heat-exchanger and supply the expanded refrigerant to the expansion valve; and
the expansion valve is configured to supply the supplied refrigerant to the evaporator without expansion.

9. The heat pump system of one of claims 1-8, wherein, in a second operation mode among the plurality of operation modes:
the first valve module is configured to expand the refrigerant introduced from the condenser and supply the expanded refrigerant to the heat-exchanger; and
the second valve module is configured to supply the refrigerant introduced from the heat-exchanger to the refrigerant line at the downstream end of the evaporator without expansion.

10. The heat pump system of one of claims 1-9, wherein, in a third operation mode among the plurality of operation modes:
the first valve module is configured to supply the refrigerant introduced from the condenser to the heat-exchanger without expansion;
the first valve module is configured to expand the refrigerant introduced from the heat-exchanger and supply the expanded refrigerant to the gas-liquid separator;
the gas-liquid separator is configured to supply the gaseous refrigerant to the compressor, and to supply the liquid refrigerant to the second valve module;
the second valve module is configured to supply the refrigerant introduced from the gas-liquid separator to the expansion valve without expansion; and
the expansion valve is configured to expand the supplied refrigerant and supply the expanded refrigerant to the evaporator.

11. The heat pump system of one of claims 1-10, wherein, in a third operation mode among the plurality of operation modes:
the first valve module is configured to supply the refrigerant introduced from the condenser to the heat-exchanger without expansion;
the first valve module is configured to expand the refrigerant introduced from the heat-exchanger and supply the expanded refrigerant to the gas-liquid separator;
the gas-liquid separator is configured to supply the gaseous refrigerant to the compressor, and to supply the liquid refrigerant to the second valve module;
the second valve module is configured to expand the refrigerant introduced from the gas-liquid separator and supply the expanded refrigerant to the expansion valve; and
the expansion valve is configured to supply the supplied refrigerant to the evaporator without expansion.

12. The heat pump system of one of claims 1-11, wherein, in a fourth operation mode among the plurality of operation modes:
the first valve module is configured to expand the refrigerant introduced from the condenser and supply the expanded refrigerant to the gas-liquid separator;
the gas-liquid separator is configured to supply the gaseous refrigerant to the compressor, and to supply the liquid refrigerant to the second valve module;
the second valve module is configured to expand the refrigerant introduced from the gas-liquid separator and supply the expanded refrigerant to the heat-exchanger; and
the second valve module is configured to supply the refrigerant introduced from the heat-exchanger to the refrigerant line at the downstream end of the evaporator without expansion.

13. The heat pump system of one of claims 1-12, wherein the refrigerant line comprises:
a first line connecting the compressor and the condenser;
a second line connecting the condenser and the first valve module;
a third line connecting the heat-exchanger and the first valve module;
a fourth line connecting the heat-exchanger and the second valve module;
a fifth line connecting the evaporator and the second valve module; and
a sixth line connecting the compressor and the evaporator.

14. The heat pump system of one of claims 1-13, further comprising:
a first connection line having a first end connected to the first valve module and a second end connected to the gas-liquid separator;
a second connection line having a first end connected to the first valve module and a second end connected to the refrigerant line at the downstream end of the heat-exchanger;
a third connection line having a first end connected to the gas-liquid separator and a second end connected to the compressor;
a fourth connection line having a first end connected to the gas-liquid separator and a second end connected to the second valve module;
a fifth connection line having a first end connected to the second valve module and a second end connected to the refrigerant line at the upstream end of the heat-exchanger; and
a sixth connection line having a first end connected to the second valve module and a second end connected to the refrigerant line between the compressor and the evaporator, wherein, optionally, the gas-liquid separator is operated when the expanded refrigerant is supplied from the first valve module, in a state of cooling or heating a vehicle interior, and configured to supply the gaseous refrigerant among the supplied refrigerant to the compressor through the third connection line to increase a flow amount of the refrigerant flowing through the refrigerant line.

15. The heat pump system of one of claims 1-14, wherein the plurality of operation modes comprises:
a first operation mode for cooling a vehicle interior without operating the gas-liquid separator;
a second operation mode for heating the vehicle interior without operating the gas-liquid separator;
a third operation mode for cooling the vehicle interior by operating the gas-liquid separator; and
a fourth operation mode for heating the vehicle interior by operating the gas-liquid separator.
